(19) Europäisches Patentamt / European Patent Office / Office européen des brevets

(11) **EP 2 861 892 B1**

(12) **FASCICULE DE BREVET EUROPEEN**

(45) Date de publication et mention de la délivrance du brevet:
**03.08.2016 Bulletin 2016/31**

(21) Numéro de dépôt: **13731405.0**

(22) Date de dépôt: **11.06.2013**

(51) Int Cl.:
**F16H 59/44** *(2006.01)*          **F16H 59/48** *(2006.01)*

(86) Numéro de dépôt international:
**PCT/FR2013/051350**

(87) Numéro de publication internationale:
**WO 2013/190217 (27.12.2013 Gazette 2013/52)**

(54) **PROCÉDÉ ET DISPOSITIF DE CONTRÔLE DE LA VITESSE ENGAGÉE D'UNE BOÎTE DE VITESSES AUTOMATISÉE DE VÉHICULE, EN FONCTION D'UNE ACCÉLÉRATION DEMANDÉE PAR UN SYSTÈME DE CONTRÔLE DE VITESSE**

VERFAHREN UND VORRICHTUNG ZUR STEUERUNG DES EINGELEGTEN GANGS EINES AUTOMATIKGETRIEBES EINES FAHRZEUGES GEMÄSS EINER DURCH EIN GESCHWINDIGKEITSSTEUERUNGSSYSTEM ANGEFORDERTEN BESCHLEUNIGUNG

METHOD AND DEVICE FOR CONTROLLING THE ENGAGED GEAR OF AN AUTOMATIC GEARBOX OF A VEHICLE ACCORDING TO AN ACCELERATION REQUESTED BY A SPEED CONTROL SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.06.2012 FR 1255681**

(43) Date de publication de la demande:
**22.04.2015 Bulletin 2015/17**

(73) Titulaire: **Peugeot Citroën Automobiles SA**
**78140 Vélizy Villacoublay (FR)**

(72) Inventeurs:
- **HECKETSWEILER, Thierry**
  **F-92600 Asnieres Sur Seine (FR)**
- **GRILL, Andreas**
  **F-78330 Fontenay Le Fleury (FR)**

(56) Documents cités:
**WO-A1-2006/074760      DE-A1-102009 019 795**
**US-A- 5 241 476          US-A- 6 067 495**

EP 2 861 892 B1

## Description

L'invention concerne les véhicules comportant un groupe motopropulseur à boîte de vitesses automatisée.

On entend ici par « boîte de vitesses automatisée » une boîte de vitesses dont le changement de vitesse peut être contrôlé automatiquement. Par conséquent, il pourra notamment s'agir d'une boîte automatique, d'une boîte de vitesses manuelle pilotée ou d'une boîte de vitesses à double embrayage (ou DCT).

Certains véhicules, éventuellement de type automobile, comportent un système de contrôle de vitesse assurant une fonction de régulateur de vitesse et/ou une fonction de limiteur de vitesse. Comme le sait l'homme de l'art, ce type de système est notamment chargé, une fois activé et programmé avec une consigne de vitesse par le conducteur d'un véhicule, de déterminer pour le groupe motopropulseur une valeur de couple qui est destinée à faire tendre la vitesse en cours du véhicule vers cette consigne de vitesse programmée.

Lorsque le véhicule comprend une boîte de vitesses automatisée, la vitesse qui est engagée au sein de cette dernière doit être choisie de façon automatisée afin que la vitesse du véhicule puisse tendre vers la consigne de vitesse programmée du système précité. Actuellement, ce choix se fait généralement en fonction de la vitesse en cours du véhicule, de l'écart de vitesse entre la consigne de vitesse programmée et la vitesse en cours du véhicule, et de la pente de la route, mais également de façon empirique au moyen de tables de correspondance calibrées afin de minimiser les rétrogradations non nécessaires. Ces dernières sont en fait généralement retardées en fonction de l'écart de vitesse précité, ce qui, dans la majorité des cas, ne permet ni d'assurer un niveau d'accélération minimum pour les fonctions assurées par le système de contrôle de vitesse, ni d'éviter une rétrogradation non nécessaire. Document DE 10 2009 019795 A1 montre le préambule des revendications 1 et 6.

L'invention a donc notamment pour but d améliorer la situation.

Elle propose notamment à cet effet un procédé, d'une part, dédié au contrôle d'une boîte de vitesses automatisée d'un véhicule muni d'un groupe motopropulseur et d'un système de contrôle de vitesse à consigne de vitesse programmable, et, d'autre part, consistant à déterminer la vitesse à engager dans la boîte de vitesses en fonction d'une accélération maximale du véhicule pour la vitesse en cours engagée dans la boîte de vitesses, de la vitesse en cours du véhicule, d'une consigne de vitesse programmée du système, et d'une valeur d'accélération demandée par le système.

Ainsi, lorsque le système de contrôle de vitesse a été activé, on peut effectuer un pilotage robuste de la boite de vitesses automatisée qui permet de choisir la vitesse à engager qui est propre à assurer au minimum une accélération de confort et dans tous les cas un suivi permanent de la consigne de vitesse choisie par le conducteur.

Le procédé de contrôle selon l'invention peut comporter d'autres caractéristiques qui peuvent être prises séparément ou en combinaison, et notamment :

- il peut comprendre une étape (i) consistant à déterminer l'accélération maximale du véhicule pour la vitesse en cours engagée dans la boîte de vitesses en fonction de forces de résistance qui sont subies par le véhicule, et d'un couple maximal offert par le groupe motopropulseur ;

  ➢ dans l'étape (i) on peut déterminer les forces de résistance qui sont subies par le véhicule en fonction de la vitesse en cours du véhicule et du couple en cours qui est fourni par le groupe motopropulseur ;

  • les forces de résistance subies par le véhicule peuvent être égales à la somme d'un effort aérodynamique subi par le véhicule, d'un effort lié à la pente dé la voie sur laquelle circule le véhicule, et d'un effort de roulement du véhicule sur cette voie ;

- il peut comprendre une étape (ii) consistant à déterminer une accélération de consigne en fonction de la valeur d'accélération demandée par le système, d'une accélération maximale de consigne, elle-même fonction au moins de l'accélération maximale du véhicule pour la vitesse en cours engagée dans la boîte de vitesses ;

  ➢ dans l'étape (ii) on peut déterminer l'accélération maximale de consigne en fonction de l'accélération maximale du véhicule pour la vitesse en cours engagée dans la boîte de vitesses et d'une accélération de confort du véhicule ;

  • dans l'étape (ii) on peut déterminer l'accélération de confort du véhicule en fonction de la vitesse en cours du véhicule et de la consigne de vitesse programmée du système ;

- il peut comprendre une étape (iii) consistant à déterminer un couple de consigne, nécessaire au système pour satisfaire la valeur d'accélération qu'il a demandée, en fonction de l'accélération de consigne déterminée, puis à déterminer la vitesse à engager dans la boîte de vitesses en fonction de ce couple de consigne déterminé.

L'invention propose également un dispositif, d'une part, dédié au contrôle d'une boîte de vitesses automatisée d'un véhicule muni d'un groupe motopropulseur et d'un système de contrôle de vitesse à consigne de vitesse programmable, et, d'autre part, agencé pour déterminer la vitesse à engager dans la boîte de vitesses en fonction d'une accélération maximale du véhicule pour la vitesse en cours engagée dans la boîte de vitesses, de la vitesse en cours du véhicule, d'une consigne de vitesse programmée du système, et d'une valeur d'accélération demandée par le système.

L'invention propose également un véhicule, éventuellement de type automobile, et comprenant un groupe motopropulseur, une boîte de vitesses automatisée, un système de contrôle de vitesse à consigne de vitesse programmable, et un dispositif de contrôle du type de celui présenté ci-avant.

D'autres caractéristiques et avantages de l'invention apparaîtront à l'examen de la description détaillée ci-après, et des dessins annexés, sur lesquels:

- la figure 1 illustre schématiquement et fonctionnellement un véhicule comprenant un groupe motopropulseur, un superviseur de moteur, et un superviseur de boîte de vitesses équipé d'un dispositif de contrôle selon l'invention, et

- la figure 2 illustre un exemple d'algorithme permettant la mise en oeuvre d'un procédé de contrôle selon l'invention.

L'invention a pour but de proposer un procédé de contrôle, et le dispositif de contrôle D associé, destinés à permettre le contrôle de la vitesse engagée d'une boîte de vitesses BV automatisée d'un véhicule V disposant d'un système de contrôle de vitesse SC.

Dans ce qui suit, on considère, à titre d'exemple non limitatif, que le véhicule V est de type automobile. Il s'agit par exemple d'une voiture. Mais l'invention n'est pas limitée à ce type de véhicule. Elle concerne en effet tout type de véhicule terrestre comprenant un groupe motopropulseur GM à boîte de vitesses BV automatisée.

Par ailleurs, on considère dans ce qui suit, à titre d'exemple non limitatif, que la boîte de vitesses BV automatisée est une boîte automatique. Mais l'invention n'est pas limitée à ce type de boîte de vitesses automatisée. Elle concerne en effet tout type de boîte de vitesses dont le changement de vitesse peut être contrôlé automatiquement, et notamment les boîtes de vitesses manuelles pilotées et les boîtes de vitesses à double embrayage (ou DCT).

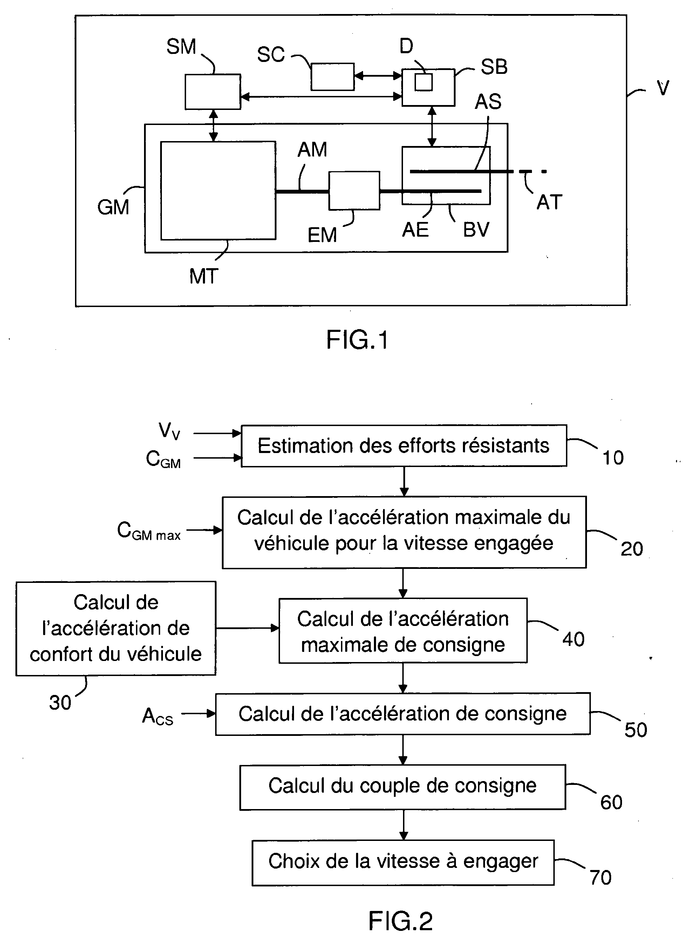

On a schématiquement représenté sur la figure 1 un véhicule V comprenant un groupe motopropulseur GM, un premier superviseur SM propre à superviser le fonctionnement de chaque moteur MT du groupe motopropulseur GM, un second superviseur SB propre à superviser le fonctionnement de la boîte de vitesses BV, un système de contrôle de vitesse SC, et un dispositif de contrôle D selon l'invention.

Le premier superviseur SM se présente par exemple sous la forme d'un calculateur (de préférence dédié). De même, le second superviseur SB se présente par exemple sous la forme d'un calculateur (de préférence dédié).

Dans l'exemple non limitatif illustré, le groupe motopropulseur GM comprend un moteur thermique MT, un arbre moteur AM, un embrayage EM et une boite de vitesses BV (automatisée).

On notera que l'invention n'est pas limitée à ce type de groupe motopropulseur GM. Elle concerne en effet également les groupes motopropulseurs de véhicule hybride, c'est-à-dire comportant un moteur thermique et au moins un moteur (ou une machine) électrique associé(e) à des moyens de stockage d'énergie électrique.

Classiquement, le moteur thermique MT comprend un vilebrequin (non représenté) qui est solidarisé fixement à l'arbre moteur AM afin d'entraîner ce dernier (AM) en rotation. Cet arbre moteur AM est couplé à un embrayage EM qui est lui-même couplé à un arbre d'entrée (ou primaire) AE de la boîte de vitesses BV afin de lui transmettre le couple moteur.

La boîte de vitesses BV (automatisée) comprend également un arbre de sortie AS qui est destiné à être couplé à son arbre d'entrée AE afin de recevoir le couple moteur pour le communiquer à un arbre de transmission AT auquel il est couplé et qui est couplé indirectement aux roues du véhicule V. L'arbre d'entrée AE et l'arbre de sortie AS comprennent chacun des pignons (non représentés) qui sont destinés à participer ensemble de façon sélective à la définition des différentes vitesses sélectionnables de la boîte de vitesses BV.

Le système de contrôle de vitesse SC est un régulateur de vitesse et/ou un limiteur de vitesse. Il est notamment chargé, lorsqu'il est activé par le conducteur du véhicule et qu'il a été programmé avec une consigne de vitesse $C_V$, de déterminer pour le groupe motopropulseur GM une valeur d'accélération $A_{CS}$ en fonction de cette consigne de vitesse $C_V$ et de la vitesse en cours $V_V$ du véhicule V. On comprendra que chaque valeur d'accélération $A_{CS}$ est déterminée de manière à faire tendre la vitesse en cours $V_V$ du véhicule V vers la consigne de vitesse $C_V$ programmée par le conducteur.

Ce système (de contrôle de vitesse) SC se présente par exemple sous la forme d'un calculateur (éventuellement dédié).

Comme indiqué précédemment, l'invention propose de mettre en oeuvre dans le véhicule V un procédé de contrôle destiné, lorsque le système (de contrôle de vitesse) SC est activé, à permettre un contrôle automatique de la vitesse engagée dans la boîte de vitesses BV de sorte que la consigne de vitesse $C_V$ programmée soit respectée au mieux, tant pendant une phase de régulation à vitesse stabilisée que pendant une phase de modification de la consigne de vitesse $C_V$.

Un tel procédé peut être mis en oeuvre par le dispositif de contrôle D. Dans l'exemple non limitatif illustré sur la figure 1, le dispositif de contrôle D fait partie du second superviseur (de boîte de vitesses) SB. Mais cela n'est pas obligatoire. Ce dispositif (de contrôle) D pourrait en effet être un équipement qui est couplé au second superviseur SB, directement ou indirectement. Par conséquent, le dispositif de contrôle D peut être réalisé sous la forme de modules logiciels (ou informatiques ou encore « software »), ou bien d'une combinaison de circuits électroniques (ou « hardware ») et de modules logiciels.

Le procédé de contrôle, selon l'invention, consiste à déterminer la vitesse qui doit être engagée dans la boîte de vitesses BV en fonction d'une accélération maximale $A_{max}$ du véhicule V pour la vitesse en cours engagée dans la boîte de vitesses BV, de la vitesse en cours $V_V$ du véhicule V, de la consigne de vitesse programmée $C_V$ du système SC, et de la valeur d'accélération $A_{CS}$ qui a été demandée par le système S activé.

L'accélération maximale $A_{max}$ du véhicule V pour la vitesse en cours engagée dans la boîte de vitesses BV peut se faire dans une première étape (i), par exemple en fonction de forces de résistance $F_{res}$ qui sont subies par le véhicule V, et d'un couple maximal $C_{GM\,max}$ qui est offert par le groupe motopropulseur GM.

Ce couple maximal $C_{GM\,max}$ est celui qui peut être immédiatement fourni au niveau des roues par le groupe motopropulseur GM pour la vitesse en cours qui est engagée dans la boîte de vitesses BV.

On notera que les forces de résistance (ou efforts résistants) $F_{res}$ peuvent être avantageusement déterminées au début de la première étape (i) en fonction de la vitesse en cours $V_V$ du véhicule V et du couple en cours $C_{GM}$ qui est fourni par le groupe motopropulseur GM à l'instant considéré. La vitesse en cours $V_V$ et le couple en cours $C_{GM}$ sont par exemple fournis au second superviseur SB par le premier superviseur SM. Mais ils pourraient également être fournis par l'ordinateur de bord du véhicule.

Par exemple, les forces de résistance $F_{res}$ sont égales à la somme d'un effort aérodynamique $F_{aérodynamique}$ subi par ledit véhicule V, d'un effort $F_{pente}$ lié à la pente de la voie sur laquelle circule le véhicule V, et d'un effort de roulement $F_{roulement}$ du véhicule V sur cette voie. Comme le sait l'homme de l'art, tous ces efforts sont déterminés à chaque instant par certains calculateurs du véhicule V (par exemple celui du moteur, notamment pour les estimateurs de pente pour pré-positionner les régulateurs) en fonction de la vitesse en cours $V_V$ et du couple en cours $C_{GM}$.

La relation entre l'accélération maximale $A_{max}$, les forces de résistance $F_{res}$ et le couple maximal $C_{GM\,max}$ est donnée par le principe fondamentale de la dynamique : $M.A_{max} = \sum forces$, où M est la masse du véhicule V et $\sum forces$ est la somme des forces qui sont appliquées au véhicule V à l'instant considéré, laquelle est donnée par la relation :

$$\sum forces = \frac{C_{GM\,max}}{R} + F_{res},$$

où R est le rayon des roues du véhicule V.

Au final on obtient donc :

$$A_{max} = \frac{C_{GM\,max}}{M.R} + \frac{F_{res}}{M}.$$

De préférence, la détermination de la vitesse devant être engagée ne se fait pas directement en fonction de l'accélération maximale $A_{max}$ et de la valeur d'accélération $A_{CS}$ (qui a été demandée par le système S activé). En effet, il est préférable de déterminer préalablement une accélération de consigne Acons, dans une deuxième étape (ii), intermédiaire. Cette détermination peut, par exemple, se faire en fonction de la valeur d'accélération $A_{CS}$ qui a été demandée par le système SC, et d'une accélération maximale de consigne $A_{max\,cons}$, qui représente le niveau d'accélération maximal disponible pour les fonctions de régulation/limitation de vitesse du système SC.

Cette accélération maximale de consigne $A_{max\,cons}$ est par exemple calculée en fonction au moins de l'accélération maximale $A_{max}$ du véhicule V pour la vitesse en cours engagée dans la boîte de vitesses BV, ainsi que de préférence d'une accélération de confort $A_{conf}$ du véhicule V. Cette accélération maximale de consigne $A_{max\,cons}$ est par exemple la valeur maximale entre $A_{max}$ et $A_{conf}$.

Lorsque le groupe motopropulseur GM peut assurer un niveau d'accélération qui est supérieur à l'accélération de confort $A_{conf}$, cela signifie que les fonctions de régulation/limitation de vitesse du système SC vont pouvoir profiter de ce niveau d'accélération.

L'accélération de confort $A_{conf}$ peut, par exemple, être déterminée pendant la deuxième étape (ii) en fonction de la vitesse en cours $V_V$ du véhicule V et de la consigne de vitesse programmée $C_V$ du système SC, et plus précisément en fonction de la vitesse en cours $V_V$ et de l'écart entre la consigne de vitesse CV et la vitesse en cours $V_V$. A cet effet, on peut par exemple utiliser une table de correspondance prédéfinie (et donc stockée dans le dispositif de contrôle D). On notera que cette accélération de confort $A_{conf}$ doit correspondre à l'accélération limite au-delà de laquelle la prestation de suivi de la consigne de vitesse $C_V$ n'est plus jugée acceptable.

L'accélération de consigne $A_{cons}$, qui est déterminée dans la deuxième étape (ii), correspond à l'accélération $A_{CS}$ demandée par les fonctions de régulation/limitation de vitesse du système SC, et « saturée » par l'accélération max de consigne $A_{max\,cons}$ afin d'assurer un bon pilotage de la vitesse engagée de la boite de vitesse BV. On notera que cette accélération de consigne $A_{cons}$ peut aller au-delà de l'accélération maximale que peut offrir le véhicule V sur la vitesse engagée. Par conséquent, dans cette situation l'accélération $A_{CS}$ demandée ne peut pas se faire sans rétrogradation.

La détermination de la vitesse devant être engagée se fait ensuite dans une troisième étape (iii). Par exemple, dans cette troisième étape (iii) on (le dispositif D) peut commencer par déterminer un couple de consigne $C_{cons}$ qui est effectivement nécessaire au système SC pour satisfaire la valeur d'accélération $A_{CS}$ qu'il a demandée, en fonction de l'accélération de consigne $A_{cons}$ déterminée. On effectue donc, ici, la conversion de l'accélération de consigne $A_{cons}$ déterminée en un couple de consigne $C_{cons}$.

On notera que ce couple de consigne $C_{cons}$ est celui qui est nécessaire aux fonctions de régulation/limitation de vitesse du système SC pour piloter la boîte de vitesses BV.

Ensuite, dans cette troisième étape (iii), on (le dispositif D) peut déterminer la vitesse à engager dans la boîte de vitesses BV en fonction de ce couple de consigne $C_{cons}$ déterminé. Pour ce faire, on (le dispositif D) peut comparer le couple de consigne $C_{cons}$ déterminé aux différents couples aux roues qui sont effectivement réalisables sur les différentes vitesses de la boîte de vitesses BV, puis choisir celle qui est capable de réaliser la consigne de couple aux roues $C_{cons}$.

On a schématiquement illustré sur la figure 2 un exemple d'algorithme permettant la mise en oeuvre d'un procédé de contrôle selon l'invention, et reprenant toutes les trois étapes (i) à (iii) décrites ci-avant.

Une première étape (i) peut commencer par une première sous-étape 10 dans laquelle on (le dispositif D) estime les efforts résistants $F_{res}$ en fonction de la vitesse en cours $V_V$ du véhicule V et du couple en cours $C_{GM}$ qui est fourni par le groupe motopropulseur GM à l'instant considéré.

Dans une deuxième sous-étape 20 de la première étape (i) on (le dispositif D) calcule l'accélération maximale $A_{max}$ du véhicule V pour la vitesse en cours engagée dans la boîte de vitesses BV en fonction des efforts résistants $F_{res}$ et du couple maximal $C_{GM\,max}$ qui est offert par le groupe motopropulseur GM.

Une deuxième étape (ii) peut commencer par une première sous-étape 30 dans laquelle on (le dispositif D) calcule une accélération de confort $A_{conf}$ en fonction de la vitesse en cours $V_v$ du véhicule V et de l'écart entre la consigne de vitesse CV et la vitesse en cours $V_v$.

Dans une deuxième sous-étape 40 de la deuxième étape (ii), on (le dispositif D) calcule une accélération maximale de consigne $A_{max\,cons}$ en fonction de l'accélération maximale $A_{max}$ du véhicule V pour la vitesse en cours engagée dans la boîte de vitesses BV, et de l'accélération de confort $A_{conf}$ du véhicule V. Comme indiqué précédemment, cette accélération maximale de consigne $A_{max\,cons}$ est par exemple la valeur maximale entre $A_{max}$ et $A_{conf}$.

Dans une troisième sous-étape 50 de la deuxième étape (ii), on (le dispositif D) calcule une accélération de consigne $A_{cons}$ en fonction de la valeur d'accélération $A_{CS}$ qui a été demandée par le système SC et de l'accélération maximale de consigne $A_{max\,cons}$.

Une troisième étape (iii) peut commencer par une première sous-étape 60 dans laquelle on (le dispositif D) calcule un couple de consigne $C_{cons}$ qui est effectivement nécessaire au système SC pour satisfaire la valeur d'accélération $A_{CS}$ qu'il a demandée, en fonction de l'accélération de consigne $A_{cons}$ déterminée.

Enfin, dans une deuxième sous-étape 70 de la troisième étape (iii), on (le dispositif D) choisit la vitesse à engager dans la boîte de vitesses BV en fonction du couple de consigne $C_{cons}$ déterminé.

Grâce à l'invention, on peut désormais réaliser un pilotage robuste d'une boite de vitesses automatisée, couplée à un système de contrôle de vitesse, qui permet de choisir une vitesse à engager dans la boîte de vitesses propre à assurer au minimum une accélération de confort et dans tous les cas un suivi permanent de la consigne de vitesse choisie par le conducteur. Par ailleurs, l'invention concerne non seulement les situations dans lesquelles la régulation de vitesse s'effectue à une vitesse déjà stabilisée (ce qui permet d'éviter de rétrograder lorsque cela n'est pas nécessaire), mais également les situations dans lesquelles le conducteur décide d'augmenter la consigne de vitesse (ce qui permet d'assurer une accélération de confort qui correspond à l'accélération minimum nécessaire pour assurer une prestation correcte du suivi de la consigne de vitesse choisie par le conducteur).

**Revendications**

1. Procédé de contrôle d'une boîte de vitesses (BV) automatisée d'un véhicule (V) muni d'un groupe motopropulseur (GM) et d'un système de contrôle de vitesse (SC) à consigne de vitesse programmable, ledit procédé consistant à déterminer une vitesse à engager dans ladite boîte de vitesses (BV) en fonction d'une accélération maximale dudit véhicule (V) pour une vitesse en cours engagée dans ladite boîte de vitesses (BV), d'une vitesse en cours dudit véhicule (V), d'une consigne de vitesse programmée dudit système (SC), et d'une valeur d'accélération demandée par ledit système (SC), ledit procédé comprenant une étape (ii) consistant à déterminer une accélération de consigne en fonction de ladite valeur d'accélération demandée par le système (SC), d'une accélération maximale de consigne, elle-même fonction de ladite accélération maximale du véhicule (V) pour la vitesse en cours engagée dans ladite boîte de vitesses (BV), et d'une accélération de confort dudit véhicule (V), ledit procédé étant **caractérisé en ce que** dans ladite étape (ii) on détermine ladite accélération de confort du véhicule (V) en fonction de ladite vitesse en cours du véhicule (V) et de ladite consigne de vitesse programmée du système (SC).

2. Procédé selon la revendication 1, **caractérisé en ce qu'**il comprend une étape (i) consistant à déterminer ladite accélération maximale du véhicule (V) pour la vitesse en cours engagée dans ladite boîte de vitesses (BV) en fonction de forces de résistance subies par ledit véhicule (V), et d'un couple maximal offert par ledit groupe motopropulseur (GM).

3. Procédé selon la revendication 2, **caractérisé en ce que** dans ladite étape (i) on détermine lesdites forces de résistance subies par le véhicule (V) en fonction de ladite vitesse en cours du véhicule (V) et d'un couple en cours fourni par ledit groupe motopropulseur (GM).

4. Procédé selon la revendication 3, **caractérisé en ce que** lesdites forces de résistance subies par le véhicule (V) sont égales à la somme d'un effort aérodynamique subi par ledit véhicule (V), d'un effort lié à la pente d'une voie sur laquelle circule ledit véhicule (V), et d'un effort de roulement dudit véhicule (V) sur ladite voie.

5. Procédé selon l'une des revendications précédentes, **caractérisé en ce qu'**il comprend une étape (iii) consistant à déterminer un couple de consigne, nécessaire audit système (SC) pour satisfaire ladite valeur d'accélération qu'il a demandée, en fonction de ladite accélération de consigne déterminée, puis à déterminer ladite vitesse à engager dans ladite boîte de vitesses (BV) en fonction dudit couple de consigne déterminé.

6. Dispositif (D) de contrôle d'une boîte de vitesses (BV) automatisée d'un véhicule (V) muni d'un groupe motopropulseur (GM) et d'un système de contrôle de vitesse (SC) à consigne de vitesse programmable, **caractérisé en ce qu'**il comporte des moyens adaptés à mettre en oeuvre les étapes d'un procédé de contrôle selon l'une des revendications précédentes.

7. Véhicule (V) comprenant un groupe motopropulseur (GM), une boîte de vitesses (BV) automatisée et un système de contrôle de vitesse (SC) à consigne de vitesse programmable, **caractérisé en ce qu'**il comprend en outre un dispositif de contrôle (D) selon la revendication 6.

**Patentansprüche**

1. Verfahren zum Steuern eines Automatikgetriebes (BV) eines Fahrzeugs (V), das mit einem Antriebsstrang (GM) und einem Gangsteuersystem (SC) mit programmierbarem Geschwindigkeitssollwert versehen ist, wobei das Verfahren darin besteht, einen Gang, der in das Schaltgetriebe (BV) in Abhängigkeit von einer maximalen Beschleunigung des Fahrzeugs (V) für einen aktuell in dem Schaltgetriebe (BV) eingelegten Gang, einer aktuellen Geschwindigkeit des Fahrzeugs (V), einem programmierten Geschwindigkeitssollwert des Systems (SC) und einer von dem System (SC) angeforderten Beschleunigung, einzulegen ist zu bestimmen, wobei das Verfahren einen Schritt (ii) umfasst, der darin besteht, eine Sollbeschleunigung in Abhängigkeit von dem von dem System (SC) angeforderten Beschleunigungswert, einer maximalen Sollbeschleunigung, die selbst von der maximalen Beschleunigung des Fahrzeugs (V) für den aktuell in das Schaltgetriebe (BV) eingelegten Gang abhängt, und einer Komfortbeschleunigung des Fahrzeugs (V) zu bestimmen, Verfahren **dadurch gekennzeichnet, dass** bei dem Schritt (ii) die Komfortbeschleunigung des Fahrzeugs (V) in Abhängigkeit von der aktuellen Geschwindigkeit des Fahrzeugs (V) und der programmierten Sollgeschwindigkeit des Systems (SC) bestimmt wird.

2. Verfahren nach Anspruch 1, **dadurch gekennzeichnet, dass** es einen Schritt (i) umfasst, der darin besteht, die maximale Beschleunigung des Fahrzeugs (V) für den in dem Schaltgetriebe (BV) aktuell eingelegten Gang in Abhängigkeit von Widerstandskräften, welchen das Fahrzeug (V) unterliegt, und einem maximalen Drehmoment, das von dem Antriebsstrang (GM) geboten wird, zu bestimmen.

3. Verfahren nach Anspruch 2, **dadurch gekennzeichnet, dass** bei dem Schritt (i) die Widerstandskräfte, welchen das Fahrzeug (V) unterliegt, in Abhängigkeit von der aktuellen Geschwindigkeit des Fahrzeugs (V) und einem aktuellen Drehmoment, das von dem Antriebsstrang (GM) geliefert wird, bestimmt wird.

4. Verfahren nach Anspruch 3, **dadurch gekennzeichnet, dass** die Widerstandskräfte, welchen das Fahrzeug (V) unterlegt, gleich der Summe einer aerodynamischen Kraft, welcher das Fahrzeug (V) unterliegt, einer Kraft, die mit dem Gefälle eines Verkehrswegs, auf dem das Fahrzeug (V) fährt, zusammenhängt, und einer Fahrkraft des Fahrzeugs (V) auf dem Verkehrsweg sind.

5. Verfahren nach einem der vorhergehenden Ansprüche, **dadurch gekennzeichnet, dass** es einen Schritt (iii) umfasst, der darin besteht, ein Solldrehmoment zu bestimmen, das für das System (SC) erforderlich ist, um den Beschleunigungswert, den es angefordert hat, in Abhängigkeit von der bestimmten Sollbeschleunig zu decken, dann den in dem Schaltgetriebe (BV) in Abhängigkeit von dem bestimmten Solldrehmoment einzulegenden Gang zu bestimmen.

6. Steuervorrichtung (D) eines Automatikgetriebes (BV) eines Fahrzeugs (V), das mit einem Antriebsstrang (GM) und einem Geschwindigkeitssteuersystem (SC) mit programmierbarem Geschwindigkeitssollwert versehen ist, **dadurch gekennzeichnet, dass** sie Mittel umfasst, die angepasst sind, um die Schritte eines Steuerverfahrens nach einem der vorhergehenden Ansprüche umzusetzen.

7. Fahrzeug (V), das einen Antriebsstrang (GM), ein Automatikschaltgetriebe (BV) und ein Geschwindigkeitssteuersystem (SC) mit programmierbarem Geschwindigkeitssollwert umfasst, **dadurch gekennzeichnet, dass** es außerdem eine Steuervorrichtung (D) nach Anspruch 6 umfasst.

**Claims**

1. A method for controlling an automatic gearbox (BV) of a vehicle (V) provided with a power train (GM) and a speed control system (SC) having a programmable set speed, said method consisting in determining a gear to be engaged in said gearbox (BV) as a function of a maximum acceleration of said vehicle (V) for a gear that is currently engaged in said gearbox (BV), a current speed of said vehicle (V), a programmed set speed of said system (SC), and an acceleration value requested by said system (SC), the method including a step (ii) consisting in determining a set acceleration as a function of said acceleration value requested by the system (SC), of a maximum set acceleration, itself a function of said maximum acceleration of the vehicle (V) for the gear that is currently engaged in said gearbox (BV), and of a comfort acceleration of said vehicle (V), said method being **characterized in that** in said step (ii) said comfort acceleration of the vehicle (V) is determined as a function of said current speed of the vehicle (V) and of said programmed set speed of the system (SC).

2. The method according to Claim 1, **characterized in that** it includes a step (i) consisting in determining said maximum acceleration of the vehicle (V) for the gear that is currently engaged in said gearbox (BV) as a function of resistance forces undergone by said vehicle (V), and of a maximum torque offered by said power train (GM).

3. The method according to Claim 2, **characterized in that** in said step (i) said resistance forces undergone by the vehicle (V) are determined as a function of said current speed of the vehicle (V) and of a current torque provided by said power train (GM).

4. The method according to Claim 3, **characterized in that** said resistance forces undergone by the vehicle (V) are equal to the sum of an aerodynamic force undergone by said vehicle (V), of a force linked to the inclination of a path on which said vehicle (V) is moving, and of a force of travel of said vehicle (V) on said path.

5. The method according to one of the preceding claims, **characterized in that** it includes a step (iii) consisting in determining a set torque, necessary for the said system (SC) for complying with said acceleration value which it has requested, as a function of said determined set acceleration, then in determining said gear to be engaged in said gearbox (BV) as a function of said determined set torque.

6. A device (D) for controlling an automatic gearbox (BV) of a vehicle (V) provided with a power train (GM) and a speed control system (SC) having a programmable set speed, **characterized in that** it comprises means suited to implement the steps of a method for controlling according to one of the preceding claims.

7. A vehicle (V) including a power train (GM), an automatic gearbox (BV) and a speed control system (SC) having a programmable set speed, **characterized in that** it further includes a device (D) for controlling according to Claim 6.

FIG.1

$V_V$
$C_{GM}$ → Estimation des efforts résistants — 10

$C_{GM\ max}$ → Calcul de l'accélération maximale du véhicule pour la vitesse engagée — 20

Calcul de l'accélération de confort du véhicule — 30 → Calcul de l'accélération maximale de consigne — 40

$A_{cs}$ → Calcul de l'accélération de consigne — 50

Calcul du couple de consigne — 60

Choix de la vitesse à engager — 70

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102009019795 A1